# FASCICULE DE BREVET EUROPEEN

(11) **EP 0 497 636 B1**
(45) Date de publication et mention de la délivrance du brevet: **22.02.1995**
(21) Numéro de dépôt: 92400029.2
(22) Date de dépôt: 07.01.1992
(51) Int. Cl.: B60R 19/24

(54) **Dispositif de fixation d'un pare-chocs de véhicule**
Befestigungseinrichtung einer Stossstange eines Fahrzeuges
Mounting arrangement for a vehicle bumper

(30) Priorité: 28.01.1991 FR 9100926
(43) Date de publication de la demande: 05.08.1992
(73) Titulaire: AUTOMOBILES PEUGEOT, 75116 Paris (FR); AUTOMOBILES CITROEN, 92200 Neuilly-sur-Seine (FR)
(72) Inventeur: Pelois, Serge, F-92240 Malakoff (FR)
(74) Mandataire: Durand, Yves Armand Louis

(56) Documents cités:
- EP-A- 0 096 454
- EP-A- 0 256 764
- FR-A- 2 639 589
- PATENT ABSTRACTS OF JAPAN vol. 7, no. 187 (M-236)(1332) 16 Août 1983 & JP-A-58 089 437 (NISSAN JIDOSHA K.K.)

## Description

La présente invention a essentiellement pour objet un dispositif de fixation d'un pare-chocs sur la caisse d'un véhicule tel que défini dans le préambule de la revendication 1 et connu, par exemple, par le document EP-A-0 096 454.

On a déjà proposé des moyens pour guider et fixer latéralement les retours d'un pare-chocs sur le côté des ailes avant d'un véhicule automobile, mais ces moyens ne s'avèrent pas totalement satisfaisants.

En effet, en cas de chocs ou même de contraîntes sur le pare-chocs, il arrive souvent que les retours du pare-chocs se détachent du côté de l'aile sur laquelle ils sont fixés, ou bien, s'ils ne se détachent pas, subissent une rotation au niveau des moyens de fixation des retours du pare-chocs sur les ailes avant du véhicule.

Il en résulte que le jeu entre le pare-chocs et les ailes avant qui devrait, même à la longue, être maintenu toujours constant, ne l'est pas, et que les retours du pare-chocs apparaissent à l'oeil quelque peu déformés par rapport aux ailes avant du véhicule, de sorte que, au total, la partie avant du véhicule n'offre pas à l'oeil un bel aspect de fini.

Aussi, la présente invention a pour but de remédier à ces inconvénients en proposant un dispositif de fixation des retours d'un pare-chocs qui permet d'obtenir une fixation très rigide et apte à maintenir un jeu constant entre notamment le bord supérieur du pare-chocs et les parties avant et latérales des ailes avant d'un véhicule automobile quelconque.

A cet effet, l'invention a pour objet un dispositif de fixation d'un pare-chocs sur la caisse d'un véhicule et comprenant des moyens pour guider et fixer latéralement les retours du pare-chocs sur les ailes du véhicule, caractérisé en ce que lesdits moyens comprennent une boutonnière et une encoche associées à l'aile et alignées de façon à définir l'axe de translation du pare-chocs dont les retours comportent une vis et un tenon susceptibles de s'engager respectivement dans ladite boutonnière et ladite encoche.

Suivant une autre caractéristique de ce dispositif, la boutonnière et l'encoche sont prévues sur un élément raidisseur intermédiaire fixé, par exemple soudé, sur la face interne de l'aile, et vissé sur un support lui-même fixé, par exemple soudé, sur la doublure de l'aile au niveau du passage de roue.

Selon encore une autre caractéristique de ce dispositif, la vis et le tenon précités sont prévus sur une pièce fixée par bouterollage sur la peau en matière plastique du pare-chocs.

On précisera encore ici que la boutonnière et l'encoche précitées, de forme évolutive, sont situées respectivement aux deux extrémités opposées de l'élément raidisseur intermédiaire qui comporte un bord replié permettant sa fixation par soudage sur l'aile.

Selon une autre caractéristique de l'invention, la partie étroite de la boutonnière s'étend dans une partie emboutie et défoncée de l'élément raidisseur, du côté de l'aile, tandis que la partie large de ladite boutonnière est ménagée sur le bord de cette partie emboutie et défoncée.

L'élément raidisseur précité comporte des trous oblongs situés entre l'encoche et la partie large de la boutonnière.

Suivant encore une autre caractéristique de l'invention, la pièce précitée, de préférence en matière plastique, fixée sur la peau du pare-chocs comporte une partie centrale fixée sur ladite peau et deux pattes ou analogues opposées dont l'une porte le tenon coopérant avec l'encoche précitée et dont l'autre porte un bossage dans lequel est engagée la vis dont la tête coopère avec la boutonnière précitée.

Mais d'autres caractéristiques et avantages de l'invention apparaîtront mieux dans la description détaillée qui suit et se réfère aux dessins annexés, donnés uniquement à titre d'exemple, et dans lesquels :
La figure 1 est une vue en perspective d'un pare-chocs et d'un châssis de véhicule montré partiellement, avant fixation du pare-chocs sur ledit châssis ;
La figure 2 est une vue en perspective partielle et éclatée d'une aile avant de véhicule et d'un pare-chocs, ainsi que des moyens utilisés pour la fixation des retours du pare-chocs sur l'aile avant ;
La figure 3 est une vue en coupe suivant sensiblement la ligne III-III de la figure 2 lorsque tous les éléments représentés sur cette figure sont assemblés.

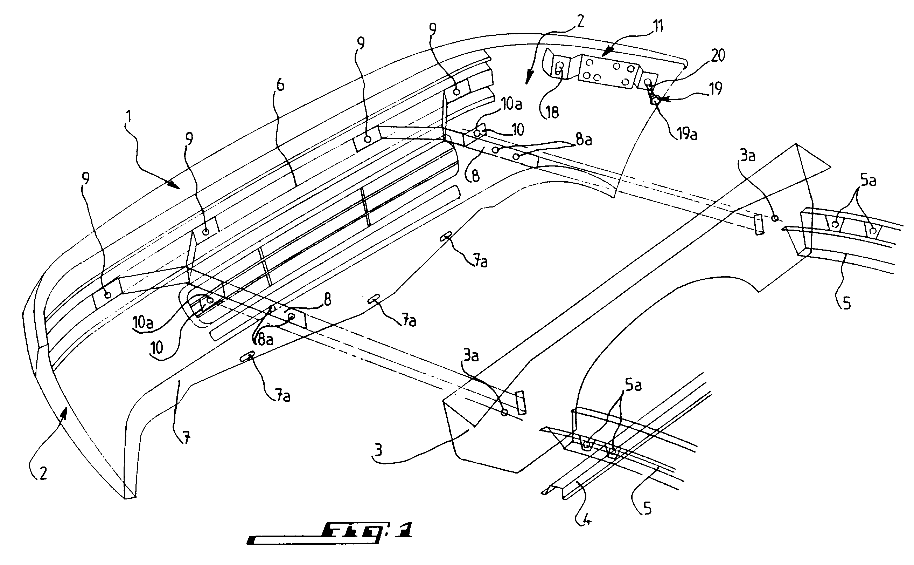

En se reportant tout d'abord à la figure 1, on voit un pare-chocs 1 comportant, comme connu en soi, deux retours 2 susceptibles de protéger la partie avant des ailes avant d'un véhicule automobile.

On a montré en 3 un élément de façade avant, en 4 une traverse inférieure, et en 5 un brancard formant la partie avant du châssis du véhicule.

Le pare-chocs 1 est essentiellement constitué d'une armature 6 noyée dans une peau 7 en matière plastique.

Pour fixer le pare-chocs 1 sur le châssis du véhicule, on fixe la peau 7, par l'intermédiaire des trous 7a sur la traverse inférieure 4. Egalement, les montants ou analogues 8 solidaires en 9 de l'armature 6 sont fixés sur le brancard 5 par l'intermédiaire des trous 8a et 5a, de même que les pattes ou analogues 10 solidaires des montants 8 sont fixées sur la façade avant 3 par l'intermédiaire des trous 10a et 3a.

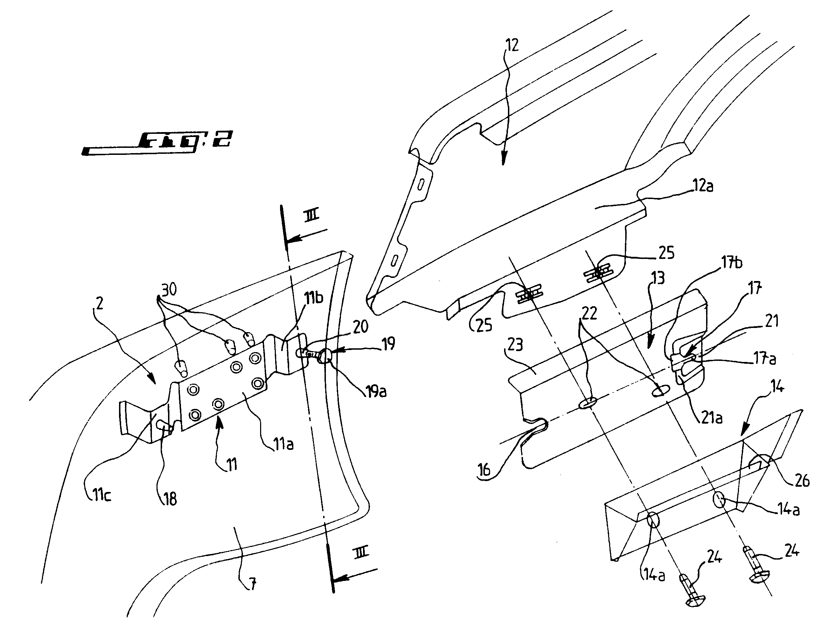

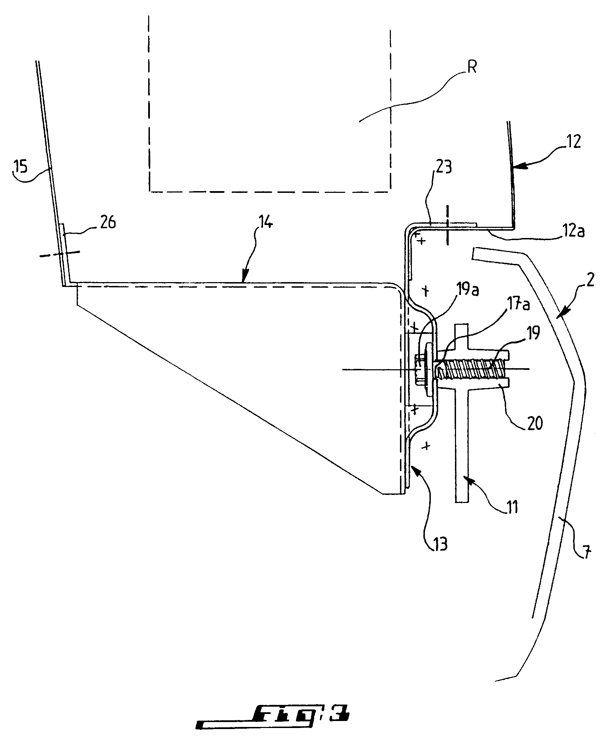

Enfin, en position montée du pare-chocs 1, les retours 2 de ce pare-chocs sont fixés sur le côté des ailes avant du véhicule par l'intermédiaire d'une pièce 11 solidaire de la face interne des retours 2 et qui sera décrite en détail ci-après en se reportant plus particulièrement aux figures 2 et 3.

Comme on le voit bien sur ces figures et conformément à l'invention, les moyens permettant la fixation des retours 2 du pare-chocs 1 sur le côté des ailes avant 12 du véhicule sont essentiellement constitués par un élément raidisseur intermédiaire 13 fixé par soudage par exemple sur la face interne de l'aile 12 et vissé sur un support 14 lui-même fixé, par soudage par exemple, sur une paroi de doublure 15 de l'aile 12 au niveau du passage de roue R, comme on le voit bien sur la figure 3.

Plus précisément, l'élément raidisseur intermédiaire 13 constitue un flan de métal ou autre matière, sensiblement rectangulaire comportant à ses deux extrémités opposées une encoche 16 débouchante et de forme évolutive, et une boutonnière 17.

La pièce 11 rapportée et fixée par bouterollage 30 sur la face interne des retours 2 du pare-chocs 1 est munie d'un tenon 18 et d'une vis 19 vissée dans un bossage 20 faisant partie de la pièce 11, ledit tenon 18 et ladite vis 19 pouvant s'engager respectivement dans l'encoche 16 et dans la boutonnière 17 de l'élément raidisseur 13 soudé sur l'aile 12, pour ainsi réaliser la fixation des retours 2 du pare-chocs 1 sur ladite aile 12. Comme on le voit bien sur la figure 2, l'encoche 16 et la boutonnière 17 sont en quelque sorte alignées de façon à définir un axe de translation et de guidage du pare-chocs 1 à fixer notamment par ses retours 2 sur le bord avant des ailes 12.

La partie ou ouverture étroite 17a de la boutonnière 17 s'étend dans une partie emboutie 21 de l'élément raidisseur 13, cette partie 21 étant défoncée ou infléchie en direction de la face interne de l'aile 12. Quant à la partie ou ouverture plus large 17b de la boutonnière 17, elle est située sur le bord 21a de la partie emboutie ou défoncée 21, c'est-à-dire, comme on le voit bien sur la figure 2, que son extrémité opposée à la partie étroite 17a se situe dans le plan formé par le flan de l'élément raidisseur 13, lequel flan comporte l'encoche 16 précédemment mentionnée, et des trous oblongs 22 entre l'encoche et la boutonnière 17, la fonction de ces trous étant expliquée plus loin.

On a montré en 23 un bord replié du flan métallique constituant l'élément raidisseur 13 et qui permet le montage et le soudage de l'élément raidisseur sur l'aile 12, plus précisément sur une partie 12a repliée vers l'intérieur de cette aile, comme on le voit bien sur la figure 3.

On voit en 24 sur la figure 2 des vis passant au travers de trous 14a dans le support 14, et au travers des trous oblongs 22 dans l'élément raidisseur 13. Ces vis 24 peuvent se visser dans des écrous 25 solidaires de l'aile 12 et par exemple montés par clippage sur cette aile.

on observera ici que le support 14 qui présente quelque peu la forme d'un dièdre comporte entre autres une partie 26 rabattue vers l'extérieur du dièdre et fixée sur la doublure 15 de l'aile 12, comme on le voit clairement sur la figure 3.

Revenant à la pièce 11 bien visible sur les figures 1 et 2 et fixée par les bouterolles 30 sur la peau 7 formant les retours 2 du pare-chocs, on observera qu'elle est réalisée en matière plastique et comporte une partie centrale 11a fixée par bouterollage sur la peau 7 et deux pattes ou analogues 11b et 11c dont l'une 11c porte le tenon 18 ayant un diamètre correspondant sensiblement à la largeur de l'encoche 16, et dont l'autre 11b porte le bossage 20 dans lequel est engagée la vis 19 qui comporte une tête 19a coopérant avec la boutonnière 17 de l'élément raidisseur 13 de la façon qui sera décrite ci-après.

Pour expliquer le montage du pare-chocs 1 sur l'avant du véhicule, on partira de la position visible sur la figure 2 et pour laquelle la vis 19 est vissée environ au tiers de sa longueur dans le bossage 20 de la pièce 11 elle-même fixée sur la peau 7 par sa partie centrale 11a comme expliqué précédemment, étant entendu que l'élément raidisseur 13 est soudé sur l'aile 12, et que le support 14 est lui aussi soudé sur la doublure 15 de l'aile.

On présente le pare-chocs sur la partie avant du véhicule, de sorte que le tenon 18 et la vis 19 puissent s'engager respectivement dans l'encoche 16 et dans l'ouverture large 17b de la boutonnière 17 qui laisse le passage à la tête 19a de la vis 19.

Après avoir effectué un assemblage partiel des montants 8 sur les brancards 5 dans un but de réglage, la vis 19 parvenue dans la partie ou ouverture étroite 17a de la boutonnière 17 sera alors serrée.

L'ensemble aile 12 - élément raidisseur 13 pourra ensuite être à son tour serré sur le support 14 au moyen des vis 24, puis on achèvera le serrage des montants 8 sur le brancard 5 et on effectuera également par vissage la fixation des pattes 10 sur la façade avant 3, et la fixation de la peau 7 sur la traverse 4.

On remarquera ici que, grâce aux trous oblongs 22 de l'élément raidisseur 13, l'ensemble aile 12 - élément raidisseur 13 sera réglable par rapport au support 14 après vissage partiel des vis 24 dans les écrous 25.

On ajoutera encore ici que la vis 19 ne sera définitivement serrée dans la boutonnière 17 qu'après mise en butée du tenon 18 dans le fond de l'encoche 16 de l'élément raidisseur 13, ce qui sera obtenu par poussée du pare-chocs 1 contre la partie avant du véhicule.

Il faut encore remarquer que les deux pattes 11b et 11c de la pièce 11 ont une hauteur différente par rapport à la partie centrale 11a de façon, en fin de poussée du pare-chocs, à rattraper les différences de niveau ou de plan entre l'encoche 16 à une extrémité de l'élément raidisseur 13 et la boutonnière 17 dans la partie défoncée 21 à l'autre extrémité de cet élément raidisseur.

On a donc réalisé suivant l'invention un système de fixation d'un pare-chocs qui permet de maintenir un jeu constant entre ce pare-chocs et les ailes avant du véhicule, de sorte que le parallélisme du pare-chocs avec la carrosserie demeurera constant et agréable à l'oeil, étant entendu que le montage du pare-chocs sera aisé et respectera toujours le parallélisme en question du fait de la coopération du tenon 18 et de la vis 19 avec respectivement l'encoche 16 et la boutonnière 17 qui toutes deux définissent un axe de guidage et de montage positifs du pare-chocs 1. En bref, grâce au système de fixation selon l'invention, on obtiendra un alignement parfait entre l'aile et la peau du pare-chocs et un assemblage pratiquement indéformable (sauf bien entendu en cas de chocs extérieurs) du pare-chocs et des ailes avant du véhicule.

Bien entendu, l'invention n'est nullement limitée au mode de réalisation décrit et illustré qui n'a été donné qu'à titre d'exemple.

## Revendications

1. Dispositif de fixation d'un pare-chocs (1) sur la caisse d'un véhicule et comprenant des moyens pour guider et fixer latéralement les retours (2) du pare-chocs (1) sur les ailes (12) du véhicule, caractérisé en ce que lesdits moyens comprennent une boutonnière (17) et une encoche (16) associées à l'aile (12) et alignées de façon à définir l'axe de translation du pare-chocs dont les retours (2) comportent une vis (19) et un tenon (18) susceptibles de s'engager respectivement dans ladite boutonnière et ladite encoche.

2. Dispositif selon la revendication 1, caractérisé en ce que la boutonnière (17) et l'encoche (16) sont prévues sur un élément raidisseur intermédiaire (13) fixé, par exemple soudé, sur la face interne de l'aile (12), et vissé sur un support (14) lui-même fixé, par exemple soudé, sur la doublure (15) de l'aile (12) au niveau du passage de roue (R).

3. Dispositif selon la revendication 1, caractérisé en ce que la vis (19) et le tenon (18) précités sont prévus sur une pièce (11) fixée par bouterollage (30) sur la peau (7) en matière plastique du pare-chocs.

4. Dispositif selon la revendication 1 ou 2, caractérisé en ce que la boutonnière (17) et l'encoche (16) précitées, de forme évolutive, sont situées respectivement aux deux extrémités opposées de l'élément raidisseur (13) qui comporte un bord replié (23) permettant sa fixation par soudage sur l'aile (12).

5. Dispositif selon les revendications 1, 2 ou 4, caractérisé en ce que la partie étroite (17a) de la boutonnière (17) s'étend dans une partie (21) emboutie et défoncée de l'élément raidisseur (13) du côté de l'aile (12) tandis que la partie large (17b) de la boutonnière est ménagée sur le bord de cette partie emboutie et défoncée.

6. Dispositif selon l'une des revendications 1, 2, 4 ou 5, caractérisé en ce que l'élément raidisseur précité (13) comporte des trous oblongs (22) situés entre l'encoche (16) et la partie large (17b) de la boutonnière (17).

7. Dispositif selon la revendication 1 ou 3, caractérisé en ce que la pièce (11), de préférence en matière plastique, fixée sur la peau (7) du pare-chocs (1) comporte une partie centrale (11a) fixée sur ladite peau et deux pattes ou analogues opposées (11b) dont l'une porte le tenon (18) coopérant avec l'encoche précitée (16) et dont l'autre porte un bossage (20) recevant la vis (19) dont la tête (19a) coopère avec la boutonnière précitée (17).

8. Dispositif selon la revendication 7, caractérisé en ce que les deux pattes précitées (11b) ont une hauteur différente par rapport au plan de la partie centrale (11a).

## Claims

1. Device for the fastening of a bumper (1) onto the car body of a vehicle and comprising means for guiding and laterally fastening the backwards bent portions (2) of the bumper (1) onto the fenders (12) of the vehicle, characterized in that the said means comprise a buttonhole (17) and a notch (16) associated with the fender (12) et aligned so as to define the axis for the translatory motion of the bumper the backward bent portions (2) of which comprise a screw (19) and a stud (18) adapted to engage the said buttonhole and the said notch, respectively.

2. Device according to claim 1, characterized in that the buttonhole (17) and the notch (16) are provided on an intermediate stiffening element (13) fastened, for example welded onto the internal face of the fender (12) and screwed onto a support (14) itself fastened for example welded onto the lining (15) of the fender (12) at the level of the wheel housing (R).

3. Device according to claim 1, characterized in that the aforesaid screw (19) and stud (18) are provided onto a part (11) fastened through rivet head snapping (30) onto the skin (7) of plastics material of the bumper.

4. Device according to claim 1 or 2, characterized in that the aforesaid buttonhole (17) and notch (16) of evolutive shape are located at both opposite ends, respectively, of the stiffening element (13) which comprises a bent edge (23) permitting its fastening through welding onto the fender (12).

5. Device according to claims 1, 2 or 4, characterized in that the narrow portion (17a) of the buttonhole (17) extends into a deep-drawn and bashed in part (21) of the stiffening element (13) towards the fender (12) whereas the wide portion (17b) of the buttonhole is formed on the edge of this deep-drawn and bashed in portion.

6. Device according to one of claims 1, 2, 4 or 5, characterized in that the aforesaid stiffening element (13) comprises oblong holes (22) located between the notch (16) and the wide portion (17b) of the buttonhole (17).

7. Device according to claim 1 or 3, characterized in that the part (11) preferably of plastics material, fastened onto the skin (7) of the bumper (1) comprises a central portion (11a) fastened onto the said skin and two opposite lugs or the like (11b) one of which carries the stud (18) co-operating with the aforesaid notch (16) and the other one of which carries a boss (20) receiving the screw (19) the head (19a) of which co-operates with the aforesaid buttonhole (17).

8. Device according to claim 7, characterized in that both aforesaid lugs (11b) have a different height with respect to the plane of the central portion (11a).

## Patentansprüche

1. Vorrichtung zur Befestigung einer Stoßstange (1) an dem Wagenkasten eines Fahrzeugs, die Mittel zur Führung und seitlichen Befestigung der rückwärts gerichteten Teile (2) der Stoßstange (1) an den Kotflügeln (12) des Fahrzeugs umfasst, dadurch gekennzeichnet, dass die besagten Mittel ein Knopfloch (17) und eine Kerbe (16) aufweisen, die dem Kotflügel (12) zugeordnet und fluchtend ausgerichtet sind, um die Parallelverschiebungsachse der Stoßstange zu bestimmen, deren rückwärts gerichteten Teile (12) eine Schraube (19) und einen Zapfen (18) aufweisen, die geeignet sind, sich jeweils in das besagte Knopfloch und in die besagte Kerbe einzufügen.

2. Vorrichtung nach Anspruch 1, dadurch gekennzeichnet, dass das Knopfloch (17) und die Kerbe (16) an einem versteifenden Zwischenelement (13) vorgesehen sind, das an der inneren Seite des Kotflügels (12) befestigt z.B angeschweisst und mit einem Halter (14) verschraubt ist, der selber an der inneren Verkleidung (15) des Kotflügels (12) im Bereich des Radkastens (R) befestigt z.B angeschweisst ist.

3. Vorrichtung nach Anspruch 1, dadurch gekennzeichnet, dass die vorgenannte Schraube (19) und der vorgenannte Zapfen (18) an einem durch Schellen (30) an der Kunststoffhaut (7) der Stoßstange befestigten Werkstück (11) vorgesehen sind.

4. Vorrichtung nach Anspruch 1 oder 2, dadurch gekennzeichnet, dass das vorgenannte Knopfloch (17) und die vorgenannte Kerbe (16) evolutionsartiger Gestalt jeweils an den beiden entgegengesetzten Enden des Versteifungselementes (13) gelegen sind, das einen seine Befestigung durch Anschweissen an dem Kotflügel (12) gestattenden umgebogenen Rand (23) aufweist.

5. Vorrichtung nach einem der Ansprüche 1, 2 oder 4, dadurch gekennzeichnet, dass der enge Abschnitt (17a) des Knopfloches (17) sich in einen getieften und eingedrückten Teil (21) des Versteifungselementes (13) auf der dem Flügel (12) zugewandten Seite erstreckt, während der breite Abschnitt (17b) des Knopfloches an dem Rand dieses getieften und eingedrückten Teiles gebildet ist.

6. Vorrichtung nach einem der Ansprüche 1, 2, 4 oder 5, dadurch gekennzeichnet, dass das vorgenannte Versteifungselement (13) zwischen der Kerbe (16) und dem breiten Abschnitt (17b) des Knopfloches (17) gelegene längliche Löcher (22) aufweist.

7. Vorrichtung nach Anspruch 1 oder 3, dadurch gekennzeichnet, dass das an der Haut (7) der Stoßstange (1) befestigte Werkstück (11) vorzugsweise aus Kunststoff einen an der besagten Haut befestigten mittleren Teil (11a) und zwei entgegengesetzte Ansatzlappen oder dergleichen (11b) aufweist, von denen der eine den mit der vorgenannten Kerbe (16) zusammenwirkenden Zapfen (18) trägt und der andere einen Buckel (20) trägt, der die Schraube (19), deren Kopf (19a) mit dem vorgenannten Knopfloch (17) zusammenwirkt, aufnimmt.

8. Vorrichtung nach Anspruch 7, dadurch gekennzeichnet, dass die beiden vorgenannten Ansatzlappen (11b) eine unterschiedliche Höhe in bezug auf die Ebene des mittleren Teiles (11a) haben.
